# EUROPÄISCHE PATENTSCHRIFT

(11) **EP 2 054 641 B1**
(45) Veröffentlichungstag und Bekanntmachung des Hinweises auf die Patenterteilung: **18.01.2012**
(21) Anmeldenummer: 07730153.9
(22) Anmeldetag: 14.06.2007
(51) Int. Cl.: F16F 9/04

(54) **LUFTFEDER**
AIR SPRING
RESSORT PNEUMATIQUE

(30) Priorität: 18.08.2006 DE 102006038807
(43) Veröffentlichungstag der Anmeldung: 06.05.2009
(73) Patentinhaber: Continental Teves AG & Co. OHG, 60488 Frankfurt (DE)
(72) Erfinder: GLEU, Jens-Uwe, 30855 Langenhagen (DE)
(86) Internationale Anmeldenummer: PCT/EP2007/055877
(87) Internationale Veröffentlichungsnummer: WO 2008/019900

(56) Entgegenhaltungen:
- EP-A1- 1 548 320
- WO-A-2007/018800
- DE-A1- 4 118 577
- DE-A1- 19 907 656

## Beschreibung

Die Erfindung betrifft eine Luftfeder enthaltend einen Deckel, einen Abrollkolben, einen Schlauchrollbalg aus elastomerem Werkstoff, wobei ein erstes Ende des Schlauchrollbalges mittels eines ersten Befestigungsmittels an dem Deckel und ein zweites Ende des Schlauchrollbalges mittels eines zweiten Befestigungsmittels an dem Abrollkolben dichtend befestigbar ist, und wobei das erste und/oder zweite Ende des Schlauchrollbalges im Bereich des ersten und/oder zweiten Befestigungsmittels von einem Halteprofil ringförmig umgeben ist.

Eine Luftfeder der eingangs genannten Art ist aus der DE4118577A1 bekannt. Die aus dieser Druckschrift bekannte Luftfeder zur Federung und Dämpfung von Schwingungen ist zwischen einem fahrzeugfesten Aufhängungsmittel und einem radfesten Aufhängungsmittel einsetzbar. Die Luftfeder weist einen Schlauchrollbalg aus elastomerem Werkstoff auf, an dessen Enden jeweils ein Befestigungsteil dicht angebracht ist. Dabei ist mindestens ein Schlauchrollbalgende auf einen stutzenförmigen Ansatz des entsprechenden Befestigungsteils aufgeschoben. Der aufgeschobene Endabschnitt des Schlauchrollbalges ist von einem umfangselastischen Halteprofil ringförmig umgeben, welches von einem in gleicher Höhe angeordneten Spannring umfasst wird. Die Abmessungen von Spannring und Halteprofil sind so ausgelegt, dass der Spannring auf das innere Halteprofil eine radiale Presskraft ausübt. Der Endbereich des Schlauchrollbalges ist zwischen dem Halteprofil und dem stutzenförmigen Ansatz des Befestigungsteiles eingeklemmt, welcher mindestens einen Vorsprung und eine umlaufende Rippe zur Fixierung des Schlauchrollbalgendes aufweist. Weist das Halteprofil eine L-förmige Struktur auf, kann es mittels einer Rastnase in den Vorsprung des Befestigungsteils eingreifen.

Nachteilig an der bekannten Luftfeder ist, dass sowohl an dem Befestigungsteil als auch an dem Halteprofil Rippen, Rastnasen und Profilierungen vorzusehen sind, damit die Befestigung des Schlauchrollbalges mit einer ausreichenden Festigkeit und Dichtigkeit an dem Befestigungsteil erfolgt. Insbesondere die Profilierungen an dem Befestigungsteil sind aufwendig in der Herstellung und verursachen damit hohe Kosten.

Aufgabe der Erfindung ist es, eine Luftfeder mit einer wirkungsvollen und kostengünstigen Verbindungstechnik des Schlauchrollbalges mit einem Befestigungsteil zu schaffen.

Diese Aufgabe wird erfindungsgemäß durch die Merkmale des Anspruchs 1 gelöst. Das Halteprofil weist gemäß dem kennzeichnenden Merkmal des Anspruchs 1 einen U-förmigen Querschnitt auf.

Das Ende des Schlauchrollbalges kann in die U-Form des Halteprofils eingeführt werden, ohne einen direkten Kontakt mit dem Deckel oder Abrollkolben oder einem Befestigungsmittel, z.B. einem Spannring, aufzuweisen. Eine im Bereich der Befestigung des Schlauchrollbalges angeordnete Profilierung am Deckel oder Abrollkolben in Form von Rippen, Rastnasen oder dgl. ist damit nicht mehr erforderlich, was die Herstellung des Deckels oder Abrollkolbens wesentlich vereinfacht und Kosten einspart. Das Halteprofil kann kostengünstig mittels herkömmlicher Spritzgusstechnik, z.B. Strangpressen, oder dgl. hergestellt werden. Ein weiterer Vorteil der Erfindung ist darin zu sehen, dass die Toleranzanforderungen, insbesondere der Durchmesser und Rundheiten, der übrigen Bauteile wie z.B. Deckel, Abrollkolben und/oder Befestigungsmittel und ggf. auch des Schlauchrollbalges zumindest deutlich herabgesetzt werden können, was den Fertigungsaufwand und den Ausschuss dieser Bauteile reduziert und somit wieder Kosten einspart.

Gemäß einer Weiterbildung der Erfindung nach Anspruch 2 ist vorgesehen, dass das Halteprofil zwischen dem ersten und/oder zweiten Befestigungsmittel und dem Deckel und/oder Abrollkolben angeordnet ist. Der Vorteil dieser Weiterbildung ist darin zu sehen, dass der Klemmprozess des Schlauchrollbalges mit einem an sich bekannten Befestigungsmittel, z.B. einem metallischen Spannring, an einem Deckel oder Abrollkolben erfolgt, ohne dass diese Bauteile in direktem Kontakt zu dem geklemmten Bereich des Schlauchrollbalgendes stehen. Somit kann die erfindungsgemäße Luftfeder mit an sich bekannten und prozesssicheren Methoden hergestellt werden. Ein weiterer Vorteil ist darin zu sehen, dass die Befestigung und Klemmung des Schlauchrollbalges ausschließlich durch das U-förmige Halteprofil auf das Schlauchrollbalgende übertragen werden, was die Toleranzanforderungen des Befestigungsmittels und des Deckels bzw. Abrollkolbens im Bereich der Befestigung des Schlauchrollbalges erheblich reduziert.

Gemäß einer Weiterbildung der Erfindung nach Anspruch 3 ist vorgesehen, dass das Halteprofil das erste und/oder zweite Ende des Schlauchrollbalges im Bereich der Stirnfläche beidseitig umschließt. Der Vorteil dieser Weiterbildung ist darin zu sehen, dass das Schlauchrollbalgende vollständig vom Halteprofil umschlossen wird und dadurch die Festigkeitsträger im druckbelasteten Raum der Luftfeder liegen. Damit ist ein Entweichen von Druckluft über die Festigkeitsträger aus der Luftfeder ausgeschlossen oder wird zumindest wesentlich erschwert.

Gemäß einer Weiterbildung der Erfindung nach Anspruch 4 ist vorgesehen, dass das Halteprofil einen ersten Steg, welcher dem ersten und/oder zweiten Befestigungsmittel zugeordnet ist, und einen zweiten Steg, welcher dem Deckel und/oder dem Abrollkolben zugeordnet ist, aufweist. Der Vorteil dieser Weiterbildung besteht darin, dass zumindest das äußere Ende des Schlauchrollbalges durch den ersten Steg keinen direkten Kontakt zu dem Befestigungsmittel, z.B. einen Spann- oder Klemmring, und durch den zweiten Steg keinen direkten Kontakt zum Deckel oder Abrollkolben aufweist. Damit lässt sich die Befestigung des Schlauchrollbalges definiert durch das Halteprofil durchführen und die Bauteiltoleranzen des Befestigungsmittels und des Deckels bzw. Abrollkolbens können reduziert werden. Außerdem wird die Möglichkeit einer Beschädigung des Schlauchrollbalges durch das Befestigungsmittel, etc. oder während bzw. durch den Befestigungs- bzw. Klemmprozess erheblich reduziert, da zwischen diesen Bauteilen kein direkter Kontakt besteht. Gemäß einer Weiterbildung der Erfindung nach Anspruch 5 ist vorgesehen, dass der erste Steg, auf der dem Schlauchrollbalg zugewandten Seite, eine Konturierung zur Fixierung des Schlauchrollbalges aufweist. Der Vorteil dieser Weiterbildung ist darin zu sehen, dass die Konturierung und damit die Halteelemente des Halteprofils zur Fixierung des Schlauchrollbalges direkt auf die Außenschicht des Schlauchrollbalges einwirken können und somit die dichtende Innenschicht des Schlauchrollbalges nicht beschädigen. Es ist damit möglich unsymmetrische Schlauchrollbälge, bei denen eine dicke, abdichtende Innenschicht durch eine oder mehrere Festigkeitsträgerlagen von einer dünneren Außenschicht getrennt wird, mit einer stärkeren Profilierung des ersten Steges des Halteprofils an der Außenschicht des Luftfederbalges zu fixieren, um eine höhere Klemmkraft zu erzielen. Die Konturierung und damit die Halteelemente sind damit den Festigkeitsträgern des Schlauchrollbalges näher und direkter zugeordnet, womit sich die Klemmkraft des Befestigungsmittels und damit des Halteprofils besser und direkter auf die Festigkeitsträger und damit den Schlauchrollbalg übertragen lässt. Ein weiterer Vorteil ist, dass sich beliebige Konturierungen, d.h. auch sehr komplizierte Konturen, auf einfache Art und Weise mit dem Halteprofil, z.B. durch Strangpressverfahren oder andere Spritzgusstechniken, darstellen lassen. Die Kontur lässt sich sehr einfach und schnell, durch den Austausch oder Änderung des Gusswerkzeuges an andere Anforderungen und Einsatzbedingungen anpassen. Es lassen sich aber weiterhin einfache, zylindrische und damit kostengünstige Befestigungsmittel einsetzen.

Gemäß einer Weiterbildung der Erfindung nach Anspruch 6 ist vorgesehen, dass die Kontur des ersten Steges unter einem Winkel α zur Rotationsachse des Halteprofils verläuft. Unter Zugbelastung entwickelt der Schlauchrollbalg eine Tendenz zum Herausrutschen aus dem Befestigungsbereich. Ein Vorteil dieser Weiterbildung ist darin zu sehen, dass sich durch die Wahl des Winkels α der Konturierung, insbesondere durch eine sich verjüngende Kontur, eine Selbsthemmung der gesamten Befestigung des Schlauchrollbalges bzw. des Ende dieses gegen das Herausrutschen erreichen lässt. Ein weiterer Vorteil ist, dass sich derartige Winkel-Neigungen der Konturierung, d.h. auch sehr komplexe und schräge Kontumeigungen, auf einfache Art und Weise mit dem Halteprofil, z.B. durch Strangpressverfahren oder andere Spritzgusstechniken, herstellen lassen, wobei weiterhin ein einfaches zylindrisches und damit kostengünstiges Befestigungsmittel verwendbar ist.

Gemäß einer Weiterbildung der Erfindung nach Anspruch 7 ist vorgesehen, dass der erste Steg, auf der dem ersten und/oder zweiten Befestigungsmittel zugewandten Seite, zumindest ein Element zur axialen Positionierung und/oder Fixierung des ersten und/oder zweiten Befestigungsmittels an dem Halteprofil aufweist. Der Vorteil dieser Weiterbildung besteht darin, dass eine sichere relative Positionierung des ersten und/oder zweiten Befestigungsmittels gegenüber dem Halteprofil möglich ist, was sowohl während des Klemmprozesses als auch bei wechselnder und/oder dynamischer Zugbelastung der Luftfeder bzw. des Schlauchrollbalges eine verbesserte Befestigung des Schlauchrollbalges darstellt. Ein weiterer Vorteil besteht darin, dass die Höhe des Befestigungsmittels in axialer Richtung geringer ausfallen kann, da die Kräfte des Befestigungsmittels über den ggf. mit einer größeren axialen Höhe versehenen ersten Steg des Halteprofils auf das eingeklemmte Ende des Schlauchrollbalges und den zweiten Steg und/oder den Deckel bzw. den Abrollkolben übertragen werden.

Gemäß einer Weiterbildung der Erfindung nach Anspruch 8 ist vorgesehen, dass der erste Steg ein Stützelement zur Abstützung und/oder Anlage des Schlauchrollbalges aufweist. Der Vorteil dieser Weiterbildung besteht darin, dass der Schlauchrollbalg ohne zusätzliche Bauteile gezielt abgestützt oder geführt werden kann. Dadurch lassen sich ansonsten entstehende Hohlräume vermeiden und der Kraftfluss in dem Schlauchrollbalg verläuft homogener.

Gemäß einer Weiterbildung der Erfindung nach Anspruch 9 ist vorgesehen, dass der zweite Steg, auf der dem Schlauchrollbalg zugewandten Seite, eine Konturierung zur Abdichtung des Schlauchrollbalges aufweist. Der Vorteil dieser Weiterbildung ist darin zu sehen, dass mit einer Konturierung des zweiten Steges auf der dem Schlauchrollbalg zugewandten Seite, also der Druckseite des Luftfederinnendrucks, zusätzliche Dicht-und/oder Halteelemente integriert werden können und der Luftfederinnenraum einfach gegen die Umgebung abgedichtet werden kann. Diese Anordnung der Dichtelemente an der dickeren Innenschicht des Schlauchrollbalges ist besonders effektiv, da die Innenschicht ggf. dicker ausgeführt ist und somit bessere Dichteigenschaften aufweist und für Beschädigungen oder ein Durchdringen der Dichtelemente bis auf die Festigkeitsträgerlager weniger empfindlich ist. Gleichzeitig erfolgt die Abdichtung der Klemmung dort, wo es sinnvollsten ist und der Luftfederinnendruck anliegt. Die Konturerhebungen, d.h. die Höhe der Dichtelemente, können geringer ausfallen als für übliche Halteelemente, da diese vornehmlich der Dichtfunktion dienen, was die Gefahr einer möglichen Beschädigung der Innenschicht des Schlauchrollbalges vermeidet oder zumindest verringert.

Wenn in dem Halteprofil sowohl der erste als auch der zweite Steg eine Konturierung zur Befestigung und/oder Abdichtung des Schlauchrollbalges an dem Deckel oder dem Abrollkolben der Luftfeder aufweisen, dann kann bei gleicher axialer Bauhöhe die Dichte an Konturelementen gegenüber herkömmlichen Klemmungen erhöht und ggf. verdoppelt werden oder die Bauhöhe des Halteprofil bzw. der Stege kann reduziert werden, um dieselben Befestigungskräfte zu erzielen. Damit lässt sich insgesamt Bauraum der Luftfeder in axialer Richtung einsparen.

Gemäß einer Weiterbildung der Erfindung nach Anspruch 10 ist vorgesehen, dass die Kontur des zweiten Steges unter einem Winkel β zur Rotationsachse des Halteprofils verläuft. Unter Zugbelastung entwickelt der Schlauchrollbalg eine Tendenz zum Herausrutschen aus dem Befestigungsbereich. Ein Vorteil dieser Weiterbildung ist darin zu sehen, dass sich durch die Wahl des Winkels β der Konturierung, insbesondere durch eine sich verjüngende Kontur, eine Selbsthemmung der gesamten Befestigung des Schlauchrollbalges bzw. des Ende dieses gegen das Herausrutschen erreichen lässt. Ein weiterer Vorteil ist, dass sich derartige winkelige Neigungen der Konturierung, d.h. auch sehr komplexe und schräge Konturneigungen, auf einfache Art und Weise mit dem Halteprofil, z.B. durch Strangpressverfahren oder andere Spritzgusstechniken, herstellen lassen, wobei weiterhin ein einfaches zylindrisches und damit kostengünstiges Befestigungsmittel verwendbar ist. Gemäß einer Weiterbildung der Erfindung nach Anspruch 11 ist vorgesehen, dass der zweite Steg des Halteprofils in axialer Richtung eine geringere Steghöhe aufweist als der erste Steg. Der Vorteil dieser Weiterbildung ist darin zu sehen, dass die Abdichtung zwischen dem Halteprofil und dem Deckel oder Abrollkolben durch den dann im Klemmbereich des ersten Steges auf dem Deckel bzw. Abrollkolben anliegenden Schlauchrollbalg erfolgt und keine weiteren Maßnahmen zur Abdichtung zwischen Halteprofil und Deckel bzw. Abrollkolben erforderlich sind.

Gemäß einer Weiterbildung der Erfindung nach Anspruch 12 ist vorgesehen, dass die Fließgrenze des Materials des Halteprofils kleiner ist als die Fließgrenze des Materials des ersten und/oder zweiten Befestigungsmittels und größer ist als die Fließgrenze zumindest eines Festigkeitsträgers des Schlauchrollbalges. Ein Vorteil dieser Weiterbildung ist, dass Festigkeitssprünge des Materials im Befestigungs-/Klemmbereich eines Schlauchrollbalgendes vom Befestigungsmittel, z.B. metallischer Spannring, zum Schlauchrollbalg und weiter zum Deckel oder Abrollkolben durch das dazwischen befindliche Halteprofil aus einem weicheren Material als das Befestigungsmittel vermieden werden oder aber zumindest reduziert werden. Weiterhin wird durch das weichere und ggf. elastische Material des Halteprofils eine zusätzliche Möglichkeit des Toleranzausgleichs im Befestigungs-/Klemmbereich geschaffen. Damit werden die Befestigungskräfte, z.B. der Klemmdruck des Spannringes, insgesamt gleichmäßiger über den gesamten Befestigungs-/Klemmbereich verteilt. Dadurch lassen sich auch sehr dünnwandige Schlauchrollbälge mit einer hohen Sicherheit und Dichtigkeit befestigen.

Gemäß einer Weiterbildung der Erfindung nach Anspruch 13 ist vorgesehen, dass das Halteprofil aus Aluminium oder Kunststoff besteht. Üblicherweise werden metallische Spannringe für die Befestigung von Schlauchrollbälgen an einem Deckel oder Abrollkolben verwendet. Der Vorteil dieser Weiterbildung ist darin zu sehen, dass Aluminium oder Kunststoffe eine geringere Fließgrenze als die üblichen Spannringe aufweisen und diese weiterhin verwendbar sind. Ein weiterer Vorteil besteh darin, dass sich ein Halteprofil aus Aluminium oder Kunststoff einfach und kostengünstig mittels herkömmlicher Spritzgusstechnik, z.B. Strangpressen, herstellen lässt.

Gemäß einer Weiterbildung der Erfindung nach Anspruch 14 ist vorgesehen, dass das Halteprofil eine geschlossene Ringform aufweist. Der Vorteil dieser Weiterbildung ist darin zu sehen, dass der Innenraum des U-förmigen Halteprofils in axialer Richtung vollkommen geschlossen und somit luftdicht ist, womit auch die Festigkeitsträgerlagen des Schlauchrollbalges luftdicht verschlossen sind. Das Halteprofil kann z.B. mittels Strangpressen hergestellt, ringförmig gebogen und durch Zusammenfügen der stumpfen Enden, z.B. mittels Kleben, Ultraschallschweißen oder dgl., zu einem geschlossen Ringprofil zusammengefügt werden.

Gemäß einer Weiterbildung der Erfindung nach Anspruch 15 ist vorgesehen, dass das Halteprofil eine offene Ringform aufweist. Der Vorteil dieser Weiterbildung besteht in der kostengünstigen Herstellung des Halteprofils als Meterware, z.B. durch Strangpressen, welche anschließend nur auf die geforderte Länge, entsprechend dem Befestigungsdurchmesser, abgeschnitten werden kann und als offener Ring, mit einem geringen Spalt zwischen den stumpfen Enden, in den Befestigungsbereich eingelegt werden kann. Die beiden stumpfen Enden des Halteprofils können durch ein Verbindungs- oder Dichtelement miteinander verbunden werden und so den Spalt dazwischen luftdicht abschließen. Das Verbindungs- oder Dichtelement kann aus einem Elastomer oder dgl. hergestellt werden.

Gemäß einer Weiterbildung der Erfindung nach Anspruch 16 ist vorgesehen, dass der Deckel und/oder der Abrollkolben zumindest ein Positionierelement zur axialen Positionierung und/oder Fixierung des Halteprofils aufweist. Mit dieser vorteilhaften Weiterbildung der Erfindung kann ein axiales Verrutschen des Halteprofils gegenüber dem Deckel oder Abrollkolben zumindest eingeschränkt oder vollständig verhindert werden. Aufgrund des geringeren Reibungskoeffizienten zwischen dem Halteprofil und dem Deckel oder Abrollkolben gegenüber der Reibpaarung Schlauchrollbalg mit Deckel oder Abrollkolben, kann eine mögliche axiale Bewegung des Halteprofils gegenüber dem Deckel oder Abrollkolben unter Zugbelastung der Luftfeder dazu ausgenutzt werden, die Befestigungskräfte auf das Halteprofil und damit den Schlauchrollbalg zu verstärken. Dazu kann der Deckel oder Abrollkolben einen konusförmige Verengung oder einen Absatz in entsprechende Richtung aufweisen.

Gemäß einer Weiterbildung der Erfindung nach Anspruch 17 ist vorgesehen, dass zwischen dem Halteprofil und dem Deckel oder dem Abrollkolben zumindest ein Dichtelement angeordnet ist. Der Vorteil dieser Weiterbildung ist darin zu sehen, dass mit dem Dichtelement, z.B. einem O-Ring oder dgl., eine einfache und sichere Abdichtung zwischen dem Halteprofil und dem Deckel oder Abrollkolben geschaffen wird. Dadurch ist es möglich die Bauteiltoleranzen aller Bauteile relativ gering zu halten oder ggf. noch weiter zu reduzieren, was Kosten einspart.

Ausführungsbeispiele und weitere Vorteile der Erfindung werden im Zusammenhang mit den nachstehenden Figuren erläutert, darin zeigen:
Fig. 1 eine Luftfeder,
Fig. 2 einen Ausschnitt der Befestigung eines Schlauchrollbalges,
Fig. 3a einen Ausschnitt eines Halteprofils,
Fig. 3b einen Ausschnitt eines Halteprofils,
Fig. 4 einen Ausschnitt eines Halteprofils an einem Anschlussteil,
Fig. 5 einen Ausschnitt eines Halteprofils an einem Anschlussteil,
Fig. 6 einen Ausschnitt der Befestigung eines Schlauchrollbalges,
Fig. 7a einen Ausschnitt Halteprofils,
Fig. 7b einen Ausschnitt Halteprofils.

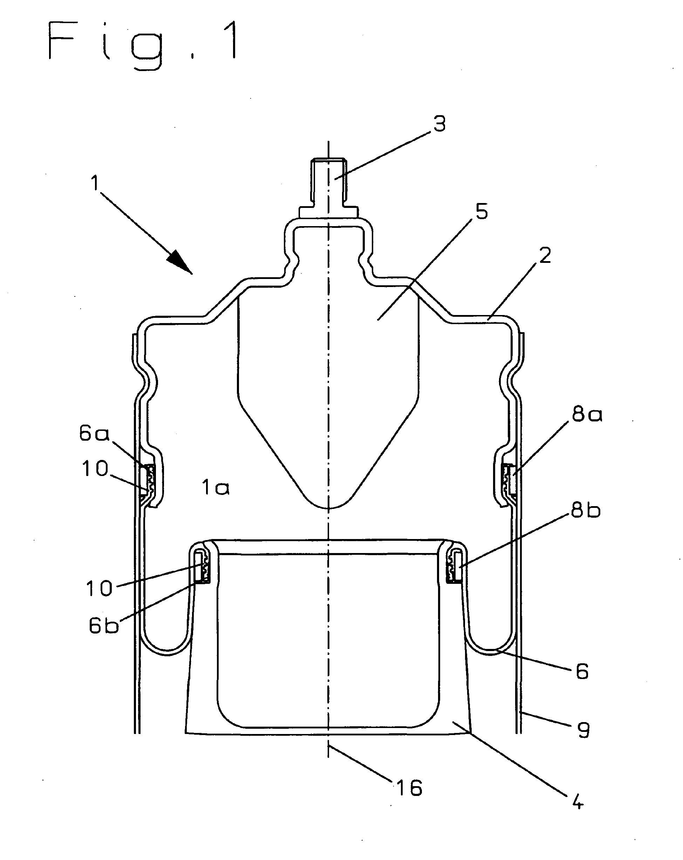

Die Fig. 1 zeigt eine Luftfeder 1 mit einem Deckel 2, einem Schlauchrollbalg 6 und einem Abrollkolben 4. Unter Ausbildung einer Rollfalte rollt der Schlauchrollbalg 6 auf dem Abrollkolben 4 ab. Der Deckel 2 kann mittels einer Verschraubung 3 fest mit einer nicht gezeigten Fahrzeugkarosserie eines Fahrzeuges verbunden werden. Der Abrollkolben 4 kann mit einer nicht gezeigten Radaufhängung oder einem Radträger eines Fahrzeuges verbunden sein. Der Schlauchrollbalg 6 ist mit seinem ersten Ende 6a und einem ersten Befestigungsmittel 8a an dem Deckel 2 und mit einem zweiten Ende 6b mittels eines zweiten Befestigungsmittels 8b an dem Abrollkolben befestigt, so dass eine geschlossene Luftkammer 1a entsteht. In die Luftkammer 1a kann über einen nicht gezeigten Luftanschluss Druckluft ein- oder ausgeführt werden, um das Höhenniveau der Luftfeder 1 und den Druck in Luftfeder 1 zu verändern. In der Luftkammer 1 a ist an dem Deckel 2 eine Zusatzfeder 5 angeordnet, welche sich an dem Abrollkolben 4 abstützt, wenn die Luftfeder 1 drucklos ist oder stark einfedert. Ferner ist an dem Deckel 2 eine Außenführung 9 befestigt, welche die Ausdehnung des Schlauchrollbalges 6 in radiale Richtung begrenzt.

Üblicherweise wird das jeweilige Befestigungsmittel 8a, 8b in radialer Richtung durch einen Pressvorgang verengt oder aufgeweitet, um den Schlauchrollbalg 6 zwischen dem Befestigungsmittel 8a, 8b und dem Deckel 2 oder dem Abrollkolben 4 durch einen sog. Klemmsitz zu befestigen. Es ist aber auch möglich den Deckel 2 oder den Abrollkolben 4 im Bereich des Befestigungsmittels 8a, 8b zu verengen bzw. aufzuweiten, um die Klemmverbindung des Schlauchrollbalges 6 zwischen dem Befestigungsmittel 8a, 8b und dem Deckel 2 oder dem Abrollkolben 4 durch einen Klemmsitz herzustellen.

Erfindungsgemäß ist sowohl über dem ersten Ende 6a als auch über dem zweiten Ende 6b des Schlauchrollbalges 6 ein Halteprofil 10 mit einem im Wesentlichen U-förmigen Querschnitt angeordnet, so dass das erste und/oder zweite Ende 6a, 6b des Schlauchrollbalges 6 zwischen dem U-förmigen Halteprofil 10 eingeklemmt und befestigt wird. Das Halteprofil 10 wird auf der einen, äußeren Seite von dem jeweiligen Befestigungsmittel 8a, 8b und auf der anderen, äußeren Seite von dem Deckel 2 bzw. dem Abrollkolben 4 umfasst und fixiert. Die axial äußeren Enden 6a, 6b des Schlauchrollbalges 6 weisen also keinen direkten Kontakt mehr zu den Befestigungsmitteln 8a, 8b bzw. dem Deckel 2 oder dem Abrollkolben 4 auf.

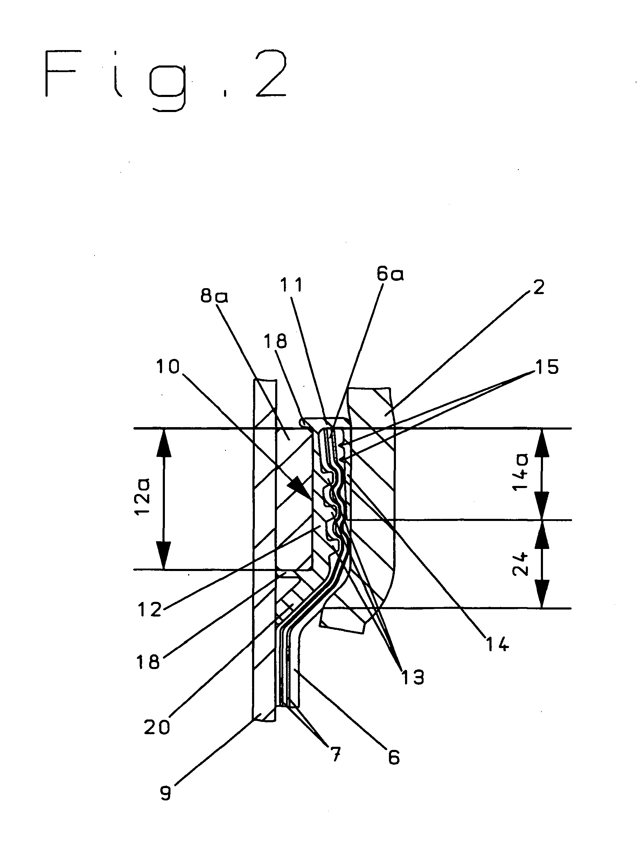

Die Fig. 2 zeigt beispielhaft einen vergrößerten Ausschnitt der Befestigung des ersten Endes 6a eines Schlauchrollbalges 6 an einem Anschlussteil, wie z.B. einem Deckel 2. Die Erfindung ist aber nicht auf das gezeigte Ausführungsbeispiel beschränkt, sondern es ist auch eine vergleichbare Befestigung des zweiten Endes 6b des Schlauchrollbalges 6 an einem Abrollkolben 4 oder dgl. möglich.

Das Halteprofil 10 liegt mit einem ersten Steg 12 auf der äußeren Seite an dem Befestigungsmittel 8a, z.B. einem metallischen Spannring, an. Der erste Steg 12 ist über einen Verbindungssteg 11 mit einem zweiten Steg 14, welcher mit der äußeren Seite an einem Anschlussbereich des Deckels 2 anliegt, verbunden, so dass eine U-Form des Halteprofils 10 gebildet wird. Die innere Seite des ersten Steges 12 liegt an der Außenseite des ersten Endes 6a des Schlauchrollbalges 6 an. Ebenso liegt die innere Seite des zweiten Steges 14 an der Innenseite des ersten Endes 6a des Schlauchrollbalges 6 an.

Die innere, dem Schlauchrollbalg 6 zugewandte Seite des Steges 12 ist mit einer Kontur 13 in Form von einer oder mehreren, vorzugsweise drei umlaufenden Haltenasen versehen, welche einem axialen Herausziehen des Schlauchrollbalges 6 aus dem U-förmigen Halteprofil 10 entgegenwirken. Die Kontur 13 bzw. die Haltenasen sind von außen auf den Schlauchrollbalg 6 gerichtet, so dass, aufgrund der dünneren elastomeren Außenschicht des Schlauchrollbalges 6, die Haltekräfte des Befestigungsmittels 6a bzw. der Kontur 12 des Halteprofils 10 mit den Haltenasen direkt auf die Festigkeitsträger 7 des Schlauchrollbalges 6 übertragen werden. Die innere, dem Schlauchrollbalg 6 zugewandte Seite des Steges 14 ist mit einer Konturierung 15 in Form von zwei umlaufenden Dichtnasen zur Abdichtung des Schlauchrollbalges 6 gegenüber dem Halteprofil 10 ausgestattet. Die Dichtnasen der Konturierung 15 sind vorzugsweise so angeordnet und ausgeführt, dass diese an der dickeren Innenschicht des Schlauchrollbalges anliegen und/oder in diese eingedrückt werden, ohne in Kontakt mit einem der Festigkeitsträger 7 des Schlauchrollbalges 6 zu treten.

Die Steghöhe 12a des ersten Steges 12 ist größer als die Steghöhe 14a des zweiten Steges 14. Dadurch ist es möglich, dass zumindest über den Bereich der Höhendifferenz der beiden Steghöhen 12a zu 14a der Schlauchrollbalg 6 von der inneren Seite des ersten Steges 12 gegen den Deckel 2 geklemmt und in dem Dichtbereich 24 abgedichtet wird. Zusätzlich kann in dem Dichtbereich 24 in Richtung der Luftkammer (1a) ein Absatz des Deckels 2 vorhanden sein, aufgrund dessen sich unter Zugbelastung der Luftfeder 1 ggf. die Klemmkraft zwischen Halteprofil 10, Schlauchrollbalg 6 und Deckel 2 erhöhen lässt. Auf der äußeren, dem ersten Befestigungsmittel 8a zugewandten Seite, weist der erste Steg 12 zwei Elemente 18 zur axialen Positionierung und Fixierung des Befestigungsmittels 8a gegenüber dem ersten Steg 12 bzw. dem Halteprofil 10 auf. Das Befestigungsmittel 8a ist in axialer Richtung zwischen den zwei Elementen 18 angeordnet. Ferner liegt an dem Befestigungsmittel 8a eine Außenführung 9 an, welche eine Ausdehnung des Schlauchrollbalges 6 in radialer Richtung begrenzt. Der Schlauchrollbalg 6 stützt sich in dem Übergangsbereich vom ersten Steg 12 des Halteprofils 10 zu der Außenführung 9 an einem Stützelement 20 des Halteprofils 10 ab. Dieses Stützelement 20 kann auch als ein separater Ring ausgeführt sein. Das Stützelement 20 verhindert, dass sich Hohlräume zwischen dem Schlauchrollbalg 6 sowie der Außenführung 9, dem Befestigungsmittel 6a und/oder dem Halteprofil 10 bilden. Ebenso werden auf diese Weise größere Richtungsänderungen des Schlauchrollbalges 6 durch das Stützelement 20 unterbunden, was die Lebensdauer des Schlauchrollbalges 6 erhöht.

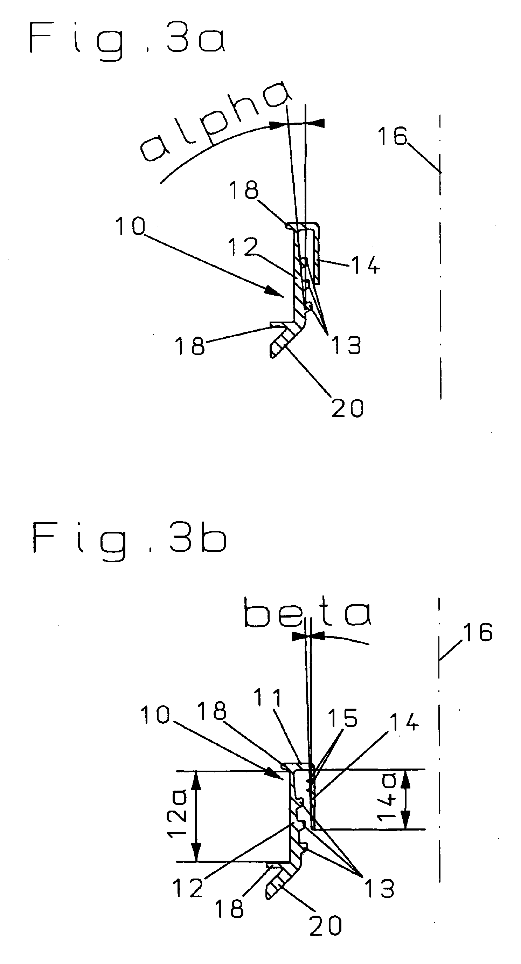

Die Fig. 3a zeigt ein Schnittprofil eines Halteprofils 10 mit seiner Rotationsachse 16. Das Halteprofil 10 weist einen ersten Steg 12 mit einer ersten Steghöhe 12a, einen Verbindungssteg 11, einen zweiten Steg 14 mit einer zweiten Steghöhe 14 auf. Zwischen den Elementen 18 kann ein nicht gezeigtes Befestigungsmittel 8a axial positioniert und fixiert werden, so dass ein Verrutschen des Befestigungsmittels gegenüber dem Halteprofil 10 sicher verhindert werden kann. An das Stützelement 20 kann sich ein nicht gezeigter Schlauchrollbalg im Auslauf der Befestigung mittels Halteprofil 10 und Befestigungsmittel sicher und "sanft" anlegen. Der erste Steg 12 ist auf der inneren, dem Schlauchrollbalg zugewandten Seite mit einer Konturierung 13 in Form von drei Haltenasen versehen. Die Anzahl und Formgebung der Haltenasen ist frei wählbar und dient der sicheren Befestigung des Schlauchrollbalges insbesondere gegen Herausrutschen aus der Befestigung/Klemmung. Die Breite des Steges 12 wird vom Stützelement 20 in Richtung des Verbindungssteges 11 dünner, was sich durch den Winkel alpha (α) der Konturierung 13 des ersten Steges 12 gegenüber der Rotationsachse 16 beschreiben und einstellen lässt. Dadurch wird ein Herausziehen oder Herausrutschen eines durch das U-förmige Halteprofil 10 befestigten und geklemmten Schlauchrollbalges in Richtung des Stützelementes 20 zumindest gehemmt, das sich durch den Winkel alpha (α) eine Selbstverstärkung der Klemmung des Schlauchrollbalges einstellt.

Die Fig. 3b zeigt ein Schnittprofil eines Halteprofils 10 mit seiner Rotationsachse 16, welches gegenüber der Fig.3a zusätzlich eine Konturierung 15 mit zwei umlaufenden Dichtnasen der inneren, dem Schlauchrollbalg zugewandten Seite des zweiten Steges 14 aufweist. Die Formgebung der Konturierung 15 und die Anzahl der Dichtnasen ist frei wählbar. Die Breite des Steges 14 wird vom Verbindungssteg 11 in Richtung der Luftkammer dünner, was sich durch den Winkel beta (β) der Konturierung 15 des zweiten Steges 14 gegenüber der Rotationsachse 16 beschreiben und einstellen lässt. Vorzugsweise ist der Winkel beta (β) kleiner als der Winkel alpha (α). Es ist aber auch möglich, dass die Breite des Steges 14 vom Verbindungssteg 11 in Richtung des der Luftkammer dicker wird, was einen negativen Winkel beta (β) der Konturierung 15 des zweiten Steges 14 gegenüber der Rotationsachse 16 zur Folge hat. Dadurch wird ein Herausziehen oder Herausrutschen eines durch das U-förmige Halteprofils 10 befestigten und geklemmten Schlauchrollbalges in Richtung des Stützelementes 20 zumindest gehemmt und ggf. eine Selbstverstärkung der Klemmung des Schlauchrollbalges durch das Halteprofil 10 hervorgerufen.

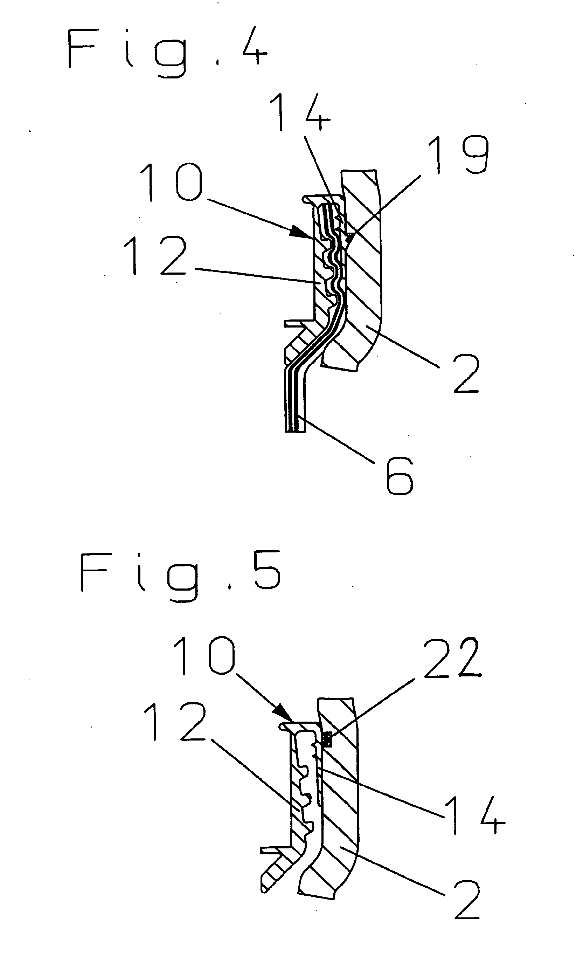

Die Fig. 4 zeigt einen Ausschnitt eines Halteprofils an einem Anschlussteil, wie z.B. einem Deckel. Der vom Halteprofil 10 eingeklemmte Schlauchrollbalg 6 liegt im Dichtbereich 24 an dem Deckel 2 an. Das Halteprofil 10 weist an der äußeren, dem Deckel 2 zugewandten Seite des zweiten Steges 14 ein Positionierelement 19 auf, welches vorzugsweise einen dreieckförmigen Querschnitt hat. Es sind aber auch alle anderen bekannten Querschnittsformen möglich. Das Positionierelement 19 greift in eine Aussparung des Deckels 2 ein, so dass das Halteelement 10 gegenüber dem Deckel in axialer Richtung fixiert ist und nicht verrutschen kann. Die Abdichtung im Befestigungsbereich erfolgt zum einen durch die Anlage des Schlauchrollbalges 6 an dem Deckel 2 im Dichtbereich 24 und/oder kann durch die Auswahl einer geeigneten Werkstoffkombination Halteprofil 10 und Deckel 2 erfolgen, z.B. eines weicheren Werkstoffes des Halteprofils 10 gegenüber einem härteren Werkstoff des Deckels 2.

Die Fig. 5 zeigt einen Ausschnitt eines Halteprofils an einem Anschlussteil, z.B. einem Deckel 2. Der Deckel 2 weist im Bereich des Halteprofils 10 mindestens eine Nut oder Aussparung auf, in die ein Dichtelement 22, z.B. ein O-Ring, eingelegt werden kann. Das Dichtelement 22 dichtet die Verbindungsstelle zwischen dem Deckel 2 und dem zweiten Steg 14 des Halteprofils 10 zuverlässig und luftdicht ab.

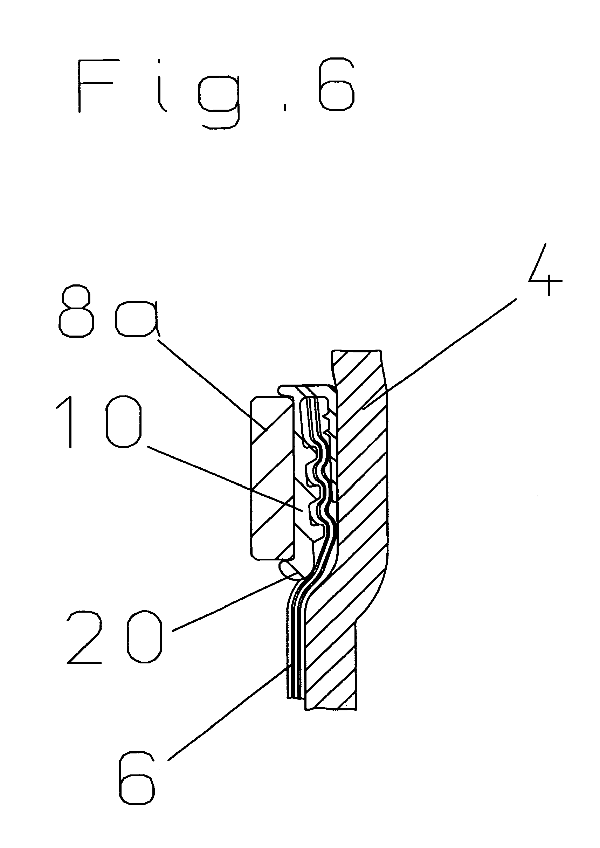

Die Fig. 6 zeigt einen Ausschnitt der Befestigung eines Schlauchrollbalges an einem Abrollkolben 4 mittels eines Befestigungsmittels 6a und einem Halteprofil 10. Das Halteprofil 10 weist, da an dieser Stelle der Luftfeder keine Außenführung vorhanden ist, einen rundlichen Querschnitt des Stützelementes 20 auf. Das Stützelement 20 dient in diesem Fall dazu, die Verbindungsstelle zwischen dem Schlauchrollbalg 6 und dem Abrollkolben 4 zusätzlich abzudichten und für eine gleichmäßige Anlage des Schlauchrollbalges 6 an dem Abrollkolben 4 zu sorgen.

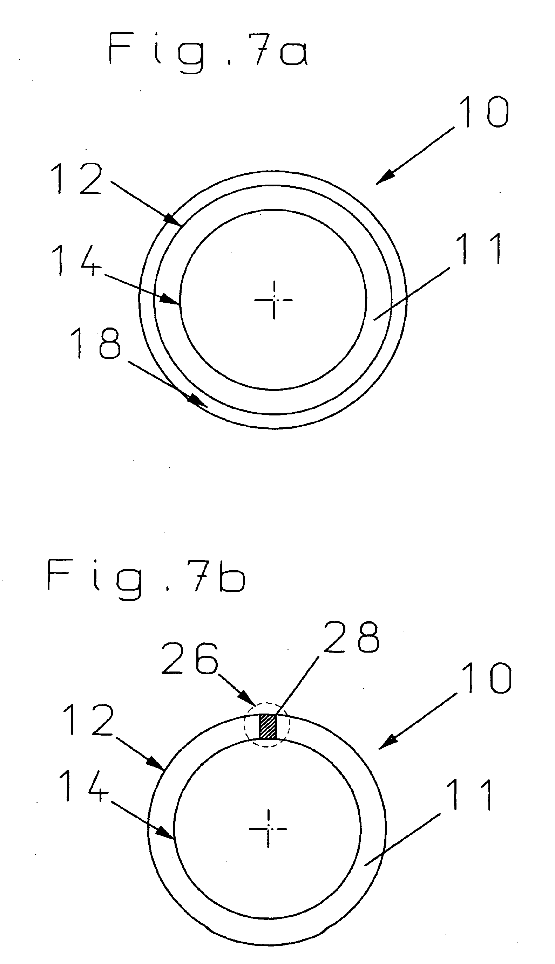

Die Fig. 7a zeigt eine Draufsicht auf ein geschlossenes ringförmiges Halteprofil 10. Zu sehen sind die Außenflächen von dem ersten Steg 12, dem zweiten Steg 14 und dem Verbindungssteg 11. Weiterhin ist der Randbereich eines Elementes zur Positionierung 18 zu sehen.

Die Fig. 7b zeigt eine Draufsicht auf ein ringförmiges Halteprofil 10, welches einen Spalt 26 aufweist. Das Halteprofil 10 kann als Strangpressoprofil hergestellt werden, abgelängt werden, in eine Ringform gebracht werden und dann mittels eines Verbindungselementes 28, z.B. durch Ultraschallschweißen mittels einer Schweißnaht, durch eine Klebenaht oder dgl miteinander verbunden werden. Es ist aber auch möglich, den Spalt durch ein Verbindungsmittel 28 in Form eines elastomeren Dichtstückes oder dgl. auszufüllen und abzudichten.

Die Erfindung ist nicht auf die in den o.g. Figuren beschriebenen Ausführungsbeispiele beschränkt. Es ist auch möglich, die Erfindung bei allen bekannten Luftfedern, Luftfederdämpfereinheiten, Luftfedermodulen oder dgl. als Befestigungsmöglichkeit eines Schlauchrollbalges an einem Anschlussteil einzusetzen.

### Bezugszeichenliste (Teil der Beschreibung)

1 - Luft feder
1 a - Luftkammer
2 - Deckel
3 - Verschraubung
4 - Abrollkolben
5 - Zusatzfeder
6 - Schlauchrollbalg
6a - erstes Ende des Schlauchrollbalges
6b - zweites Ende des Schlauchrollbalges
6c - Stirnfläche des Schlauchrollbalges
7 - Festigkeitsträger
8a - erster Befestigungsmittel
8b - zweites Befestigungsmittel
9 - Außenführung
10 - Halteprofil
11 - Verbindungssteg
12 - erster Steg des Halteprofils
12a - Steghöhe (des ersten Steges)
13 - Konturierung (des ersten Steges)
14 - zweiter Steg des Halteprofils
14a - Steghöhe (des zweiten Steges)
15 - Konturierung (des zweiten Steges)
16 - Rotationsachse
18 - Element zur Positionierung
19 - Positionierelement
20 - Stützelement
22 - Dichtelement
24 - Dichtbereich
26 - Spalt
28 - Verbindungsmittel
alpha (α) - Winkel
beta (β) - Winkel

## Patentansprüche

1. Luftfeder (1) enthaltend einen Deckel (2), einen Abrollkolben (4), einen Schlauchrollbalg (6) aus elastomerem Werkstoff, wobei ein erstes Ende des Schlauchrollbalges (6a) mittels eines ersten Befestigungsmittels (8a) an dem Deckel (2) und eine zweites Ende des Schlauchrollbalges (6b) mittels eines zweiten Befestigungsmittels (8b) an dem Abrollkolben (4) dichtend befestigbar ist, und wobei das erste und/oder zweite Ende des Schlauchrollbalges (6a;6b) im Bereich des ersten und/oder zweiten Befestigungsmittels (8a;8b) von einem Halteprofil (10) ringförmig umgeben ist, und wobei das Halteprofil (10) auf der einen, äußeren Seite von dem jeweiligen Befestigungsmittel (8a, 8b) und auf der anderen, äußeren Seite von dem Deckel (2) bzw. dem Abrollkolben (4) umfasst und fixiert ist, **dadurch gekennzeichnet, dass** das Halteprofil (10) einen im Wesentlichen U-förmigen Querschnitt aufweist, so dass das erste und/oder zweite Ende (6a, 6b) des Schlauchrollbalges (6) zwischen dem U-förmigen Halteprofil (10) eingeklemmt und befestigt ist.

2. Luftfeder (1) nach Anspruch 1, **dadurch gekennzeichnet, dass** das Halteprofil (10) zwischen dem ersten und/oder zweiten Befestigungsmittel (8a;8b) und dem Deckel (2) und/oder Abrollkolben (4) angeordnet ist.

3. Luftfeder (1) nach Anspruch 1 oder Anspruch 2, **dadurch gekennzeichnet, dass** das Halteprofil (10) das erste und/oder zweite Ende des Schlauchrollbalges (6a; 6b) im Bereich der Stirnfläche (6c) beidseitig umschließt.

4. Luftfeder (1) nach Anspruch 1,2 oder 3, **dadurch gekennzeichnet, dass** das Halteprofil (10) einen ersten Steg (12), welcher dem ersten und/oder zweiten Befestigungsmittel (8a; 8b) zugeordnet ist, und einen zweiten Steg (14), welcher dem Deckel (2) und/oder dem Abrollkolben (4) zugeordnet ist, aufweist.

5. Luftfeder (1) nach Anspruch 4, **dadurch gekennzeichnet, dass** der erste Steg (12), auf der dem Schlauchrollbalg (6) zugewandten Seite, eine Konturierung 13) zur Fixierung des Schlauchrollbalges (6) aufweist.

6. Luftfeder (1) nach Anspruch 5, **dadurch gekennzeichnet, dass** die Kontur (13) des ersten Steges unter einem Winkel alpha (α) zur Rotationsachse (16) des Halteprofils (10) verläuft.

7. Luftfeder (1) nach Anspruch 4,5 oder 6, **dadurch gekennzeichnet, dass** der erste Steg (12), auf der dem ersten und/oder zweiten Befestigungsmittel (8a; 8b) zugewandten Seite, zumindest ein Element (18) zur axialen Positionierung und/oder Fixierung des ersten und/oder zweiten Befestigungsmittels (8a; 8b) an dem Halteprofil (10) aufweist.

8. Luftfeder (1) nach Anspruch 4, 5,6 oder 7, **dadurch gekennzeichnet, dass** der erste Steg (12) ein Stützelement (20) zur Abstützung und/oder Anlage des Schlauchrollbalges (10) aufweist.

9. Luftfeder (1) nach Anspruch 4, **dadurch gekennzeichnet, dass** der zweite Steg (14), auf der dem Schlauchrollbalg (10) zugewandten Seite, eine Konturierung (15) zur Abdichtung des Schlauchrollbalges (10) aufweist.

10. Luftfeder (1) nach Anspruch 9, **dadurch gekennzeichnet, dass** die Kontur (15) des zweiten Steges (14) unter einem Winkel beta (β) zur Rotationsachse 16) des Halteprofils (10) verläuft.

11. Luftfeder (1) nach einem der Ansprüche 4 bis 10, **dadurch gekennzeichnet, dass** der zweite Steg (14) des Halteprofils (10) in axialer Richtung eine geringere Steghöhe (14a) aufweist, als der erste Steg (12, 12a).

12. Luftfeder (1) nach einem der vorherigen Ansprüche, **dadurch gekennzeichnet, dass** die Fließgrenze des Materials des Halteprofils (10) kleiner ist als die Fließgrenze des Materials des ersten und/oder zweiten Befestigungsmittels (8a; 8b) und größer ist als die Fließgrenze zumindest eines Festigkeitsträgers (7) des Schlauchrollbalges (6).

13. Luftfeder (1) nach Anspruch 12, **dadurch gekennzeichnet, dass** das Halteprofil (10) aus Aluminium oder Kunststoff besteht.

14. Luftfeder (1) nach einem der vorherigen Ansprüche 1 bis 13, **dadurch gekennzeichnet, dass** das Halteprofil (10) eine geschlossene Ringform aufweist.

15. Luftfeder (1) nach einem der vorherigen Ansprüche 1 bis 13, **dadurch gekennzeichnet, dass** das Halteprofil (10) eine offene Ringform aufweist.

16. Luftfeder (1) nach einem der vorherigen Ansprüche, **dadurch gekennzeichnet, dass** der Deckel (2) und/oder der Abrollkolben (4) zumindest ein Positionierelement (19) zur axialen Positionierung und/oder Fixierung des Halteprofils (10) aufweist.

17. Luftfeder (1) nach einem der vorherigen Ansprüche, **dadurch gekennzeichnet, dass** zwischen dem Halteprofil (10) und dem Deckel (2) oder dem Abrollkolben (4) zumindest ein Dichtelement (22) angeordnet ist.

## Claims

1. Air spring (1) comprising a cover (2), a rolling piston (4), a tubular rolling bellows (6) composed of elastic material, wherein a first end of the tubular rolling bellows (6a) can be sealingly fastened by a first fastening means (8a) to the cover (2) and a second end of the tubular rolling bellows (6b) can be sealingly fastened by a second fastening means (8b) to the rolling piston (4), and wherein the first and/or second end of the tubular rolling bellows (6a; 6b) is annularly encircled in the region of the first and/or second fastening means (8a; 8b) by a retaining profile (10), and wherein the retaining profile (10) is encompassed and fixed on one outer side by the respective fastening means (8a, 8b) and on the other outer side by the cover (2) or the rolling piston (4), **characterized in that** the retaining profile (10) has a substantially U-shaped cross section, such that the first and/or second end (6a, 6b) of the tubular rolling bellows (6) are/is clamped and fastened between the U-shaped retaining profile (10).

2. Air spring (1) according to Claim 1, **characterized in that** the retaining profile (10) is arranged between the first and/or second fastening means (8a; 8b) and the cover (2) and/or rolling piston (4).

3. Air spring (1) according to Claim 1 or Claim 2, **characterized in that** the retaining profile (10) surrounds the first and/or second end of the tubular rolling bellows (6a; 6b) in the region of the end surface (6c).

4. Air spring (1) according to Claim 1, 2 or 3, **characterized in that** the retaining profile (10) has a first web (12), which is assigned to the first and/or second fastening means (8a; 8b), and a second web (14), which is assigned to the cover (2) and/or the rolling piston (4).

5. Air spring (1) according to Claim 4, **characterized in that** the first web (12) has, on the side facing towards the tubular rolling bellows (6), a contouring (13) for fixing the tubular rolling bellows (6).

6. Air spring (1) according to Claim 5, **characterized in that** the contour (13) of the first web runs at an angle alpha (α) with respect to the axis of rotation (16) of the retaining profile (10).

7. Air spring (1) according to Claim 4, 5 or 6, **characterized in that** the first web (12) has, on the side facing towards the first and/or second fastening means (8a; 8b), at least one element (18) for axial positioning and/or fixing of the first and/or second fastening means (8a; 8b) on the retaining profile (10).

8. Air spring (1) according to Claim 4, 5, 6 or 7, **characterized in that** the first web (12) has a support element (20) for supporting and/or bearing the tubular rolling bellows (6).

9. Air spring (1) according to Claim 4, **characterized in that** the second web (14) has, on the side facing towards the tubular rolling bellows (6), a contouring (15) for sealing off the tubular rolling bellows (6).

10. Air spring (1) according to Claim 9, **characterized in that** the contour (15) of the second web (14) runs at an angle beta (β) with respect to the axis of rotation (16) of the retaining profile (10).

11. Air spring (1) according to one of Claims 4 to 10, **characterized in that** the second web (14) of the retaining profile (10) has a lower web height (14a) in the axial direction than the first web (12, 12a).

12. Air spring (1) according to one of the preceding claims, **characterized in that** the yield strength of the material of the retaining profile (10) is lower than the yield strength of the material of the first and/or second fastening means (8a; 8b) and higher than the yield strength of at least one reinforcing element (7) of the tubular rolling bellows (6).

13. Air spring (1) according to Claim 12, **characterized in that** the retaining profile (10) is composed of aluminium or plastic.

14. Air spring (1) according to one of the preceding Claims 1 to 13, **characterized in that** the retaining profile (10) has a closed annular form.

15. Air spring (1) according to one of the preceding Claims 1 to 13, **characterized in that** the retaining profile (10) has an open annular form.

16. Air spring (1) according to one of the preceding claims, **characterized in that** the cover (2) and/or the rolling piston (4) has at least one positioning element (19) for axial positioning and/or fixing of the retaining profile (10).

17. Air spring (1) according to one of the preceding claims, **characterized in that** at least one sealing element (22) is arranged between the retaining profile (10) and the cover (2) or the rolling piston (4).

## Revendications

1. Ressort pneumatique (1) contenant un couvercle (2), un piston de déroulage (4), un soufflet roulant tubulaire (6) en matériau élastomère, une première extrémité du soufflet roulant tubulaire (6a) pouvant être fixée de manière hermétique au moyen d'un premier moyen de fixation (8a) au couvercle (2) et une deuxième extrémité du soufflet roulant tubulaire (6b) pouvant être fixée de manière hermétique au moyen d'un deuxième moyen de fixation (8b) au piston de déroulage (4), et la première et/ou la deuxième extrémité du soufflet roulant tubulaire (6a ; 6b) étant entourées de manière annulaire dans la région du premier et/ou du deuxième moyen de fixation (8a ; 8b) par un profilé de retenue (10), le profilé de retenue (10) étant entouré et fixé sur un côté extérieur par le moyen de fixation respectif (8a, 8b) et sur l'autre côté extérieur par le couvercle (2) ou le piston de déroulage (4), **caractérisé en ce que** le profilé de retenue (10) présente une section transversale sensiblement en forme de U, de sorte que la première et/ou la deuxième extrémité (6a, 6b) du soufflet roulant tubulaire (6) soit serrée et fixée entre le profilé de retenue en forme de U (10).

2. Ressort pneumatique (1) selon la revendication 1, **caractérisé en ce que** le profilé de retenue (10) est disposé entre le premier et/ou le deuxième moyen de fixation (8a ; 8b) et le couvercle (2) et/ou le piston de déroulage (4).

3. Ressort pneumatique (1) selon la revendication 1 ou la revendication 2, **caractérisé en ce que** le profilé de retenue (10) entoure des deux côtés la première et/ou la deuxième extrémité du soufflet roulant tubulaire (6a ; 6b) dans la région de la surface frontale (6c).

4. Ressort pneumatique (1) selon la revendication 1, 2 ou 3, **caractérisé en ce que** le profilé de retenue (10) présente une première nervure (12) qui est associée au premier et/ou au deuxième moyen de fixation (8a ; 8b) et une deuxième nervure (14) qui est associée au couvercle (2) et/ou au piston de déroulage (4).

5. Ressort pneumatique (1) selon la revendication 4, **caractérisé en ce que** la première nervure (12) présente, sur le côté tourné vers le soufflet roulant tubulaire (6), un contour (13) pour la fixation du soufflet roulant tubulaire (6).

6. Ressort pneumatique (1) selon la revendication 5, **caractérisé en ce que** le contour (13) de la première nervure s'étend suivant un angle alpha (α) par rapport à l'axe de rotation (16) du profilé de retenue (10).

7. Ressort pneumatique (1) selon la revendication 4, 5 ou 6, **caractérisé en ce que** la première nervure (12), du côté tourné vers le premier et/ou le deuxième moyen de fixation (8a ; 8b), présente au moins un élément (18) pour le positionnement axial et/ou la fixation du premier et/ou du deuxième moyen de fixation (8a ; 8b) sur le profilé de retenue (10).

8. Ressort pneumatique (1) selon la revendication 4, 5, 6 ou 7, **caractérisé en ce que** la première nervure (12) présente un élément de support (20) pour le support et/ou l'appui du soufflet roulant tubulaire (6).

9. Ressort pneumatique (1) selon la revendication 4, **caractérisé en ce que** la deuxième nervure (14), du côté tourné vers le soufflet roulant tubulaire (6), présente un contour (15) pour l'étanchéité du soufflet roulant tubulaire (6).

10. Ressort pneumatique (1) selon la revendication 9, **caractérisé en ce que** le contour (15) de la deuxième nervure (14) s'étend suivant un angle bêta (β) par rapport à l'axe de rotation (16) du profilé de retenue (10).

11. Ressort pneumatique (1) selon l'une quelconque des revendications 4 à 10, **caractérisé en ce que** la deuxième nervure (14) du profilé de retenue (10) présente dans la direction axiale une plus faible hauteur de nervure (14a) que la première nervure (12, 12a).

12. Ressort pneumatique (1) selon l'une quelconque des revendications précédentes, **caractérisé en ce que** la limite d'élasticité du matériau du profilé de retenue (10) est inférieure à la limite d'élasticité du matériau du premier et/ou du deuxième moyen de fixation (8a ; 8b) et supérieure à la limite d'élasticité d'au moins un renfort (7) du soufflet roulant tubulaire (6).

13. Ressort pneumatique (1) selon la revendication 12, **caractérisé en ce que** le profilé de retenue (10) se compose d'aluminium ou de plastique.

14. Ressort pneumatique (1) selon l'une quelconque des revendications précédentes 1 à 13, **caractérisé en ce que** le profilé de retenue (10) présente une forme annulaire fermée.

15. Ressort pneumatique (1) selon l'une quelconque des revendications précédentes 1 à 13, **caractérisé en ce que** le profilé de retenue (10) présente une forme annulaire ouverte.

16. Ressort pneumatique (1) selon l'une quelconque des revendications précédentes, **caractérisé en ce que** le couvercle (2) et/ou le piston de déroulage (4) présentent au moins un élément de positionnement (19) pour le positionnement axial et/ou la fixation du profilé de retenue (10).

17. Ressort pneumatique (1) selon l'une quelconque des revendications précédentes, **caractérisé en ce qu'**au moins un élément d'étanchéité (22) est disposé entre le profilé de retenue (10) et le couvercle (2) ou le piston de déroulage (4).
